# EUROPEAN PATENT SPECIFICATION

(11) **EP 4 347 082 B1**
(45) Date of publication and mention of the grant of the patent: **27.08.2025**
(21) Application number: 21729565.8
(22) Date of filing: 02.06.2021
(51) Int. Cl.: B01D 17/02, B01D 17/04, B01D 17/12, C10G 33/04, C10G 33/08

(54) **METHOD AND SYSTEM FOR PURIFICATION OF OIL**
VERFAHREN UND SYSTEM ZUR REINIGUNG VON ÖL
PROCÉDÉ ET SYSTÈME DE PURIFICATION D'HUILE

(43) Date of publication of application: 10.04.2024
(73) Proprietor: SKF MFR Technology AB, 12030 Stockholm (SE)
(72) Inventor: HURNASTI, Lasse, 14141 Huddinge (SE)
(74) Representative: Kohl, Thomas
(86) International application number: PCT/EP2021/064802
(87) International publication number: WO 2022/253427

(56) References cited:
- US-A- 4 938 876
- US-A1- 2014 202 929
- US-A1- 2015 361 350
- US-A1- 2018 023 009
- US-B1- 10 280 375

## Description

### TECHNICAL FIELD OF THE INVENTION

The present invention relates to a method and a system for purification of oil.

### BACKGROUND OF THE INVENTION

Purification of oils, such as for example slop oil, waste oil, slurry oil, crude oil, industrial oil, petroleum products or bio-oils is important for the possibility to use/reuse oils and therefore an important factor for the environmental future and the limited nature resources of oils. Purification of slop oil (and waste oil, hereafter only referred to as slop oil) is problematic in many ways. Slop oil can comprise oil, water, particles and emulsion phase. The particles can stabilize the emulsion phase and complicate a purification process. Purification of industrial emulsions comprising water and oil, such as for example cutting fluids is also an important environmental issue.

In slop oil treatment, centrifuge systems are often used for example for separation of oil and water. Slop oils comprise different ingredients, such as different types of oils, water and particles, in different amounts. Hereby a composition of the slop oil will differ between each batch of slop oil to be purified. For example, a density and a viscosity of the oil in the slop oil will differ between different slop oils. Different types of oils may be present in the slop oil in different ratios and the different oils may have different viscosities. Hereby treatment conditions are very different for all batches of slop oil to be purified. This may be the case also for other types of oil to be purified, such as different types of industrial oils. A good purification result will not be achieved when different contaminated oils, such as different batches of slop oils are purified in the same system.

Small water droplets are hard to remove from oil. For example, disc stack centrifugal separators can only remove all water droplets above a certain size. This size is dependent on both the centrifugal separator itself and on viscosity and density differences of the oil. Small water droplets are also hard to get rid of in other types of separation devices. An example of treatment of contaminated oil is provided in US4938876.

### SUMMARY

An object of the present invention is to provide an oil purification method and system by which small droplets of a heavy phase, for example water, efficiently are removed from the contaminated oil.

This is achieved by a method and a system according to the independent claims.

By adding droplets of heavy phase into the contaminated oil, these added droplets will by coalescence attract droplets of heavy phase already present in the contaminated oil. Hereby droplets of heavy phase will combine into bigger droplets. Especially very small sized droplets of heavy phase can be caught by the added droplets whereby they will be more easily separated in the separation device. A separation device can be effective for removing all droplets above a certain size but will be less effective for removing droplets below a certain size. Hereby this invention will improve separation efficiency by promoting more aggregation/coalescence of the smallest droplets into larger droplets which are easier to separate. The sizes of the added droplets of heavy phase are controlled to be of suitable size, i.e. suitable for being possible to remove in the separation device and suitable for attracting other droplets of heavy phase. The method and system according to the invention may also be effective for desalting purposes of oils. By adding fresh water as droplets to an oil comprising emulsified water with a high salt content the salt content will be diluted. The added droplets of fresh water will attract emulsified salty water and hereby more of the salty water can be separated in the separation device whereby the oil is desalted. In one embodiment of the invention the oil purification system further comprises a contaminated oil tank in which contaminated oil to be purified can be provided, and said heavy phase addition part comprises an inlet which is fluidly connected with an outlet of the contaminated oil tank, possibly via one or more other units of the oil purification system and the separation device comprises an inlet which is fluidly connected to an outlet of the heavy phase addition part, possibly via one or more other units of the oil purification system.

In the embodiment of the invention said step of adding droplets comprises controlling a size distribution of said droplets being added. In one embodiment the oil purification system may further comprise a control system, which is provided in communication contact with the heavy phase addition part and configured to control the heavy phase addition part to add droplets of heavy phase with a controlled size distribution. By controlling a size distribution of the added droplets it can for example be avoided to add too small droplets which are hard to remove in the separation device and a size of the added droplets can be optimized for effective coalescence.

In the embodiment of the invention the method further comprises a step of measuring one or more properties in a light phase retrieved from a light phase outlet of the separation device, wherein said one or more properties comprise one or more of a density, a viscosity, an amount of heavy phase content and a flow rate of the light phase and wherein said controlling of a size distribution of the droplets of heavy phase added into the contaminated oil is provided in dependence of at least one value of the measured one or more properties. In the embodiment of the invention said oil purification system further comprises a at least one light phase sensor positioned in the oil purification system for measuring one or more properties in a light phase retrieved from a light phase outlet of the separation device, wherein said one or more properties comprises one or more of a density, a viscosity, an amount of heavy phase content and a flow rate of the light phase and wherein said control system is in communication contact with said at least one light phase sensor and wherein said control system is configured to control said heavy phase addition part to add droplets of heavy phase with a controlled size distribution in dependence of at least one value of said one or more measured properties. Hereby a size distribution of the added droplets can be optimized for different conditions. For example a smaller size of the droplets can be separated effectively in a separation device if the oil viscosity is low and/or if a flow rate is low and hereby droplets of heavy phase of smaller sizes can safely be provided by the heavy phase addition part without a risk that they will not be separated to a high degree in the separation device.

In one embodiment of the invention said step of adding droplets of heavy phase into the contaminated oil comprises adding the droplets via a nozzle into the contaminated oil and the size distribution of said droplets is controlled by controlling a supply pressure to the nozzle. In one embodiment of the invention the heavy phase addition part comprises an inlet which can be connected to a heavy phase source and the heavy phase addition part comprises further a heavy phase delivering device which is configured for delivering heavy phase into the contaminated oil which is treated in the heavy phase addition part. In one embodiment of the invention the heavy phase addition part comprises a pump for pumping heavy phase from the inlet to the heavy phase delivering device, wherein said heavy phase delivering device is a nozzle, wherein the nozzle is positioned in the oil purification system such that droplets of heavy phase can be sprayed through the nozzle into the contaminated oil in the oil purification system.

In one embodiment of the invention the method further comprises a step of measuring a supply pressure to the nozzle and the step of adding droplets comprises controlling a pump in dependence of said measured supply pressure to pump heavy phase from a heavy phase source and through the nozzle such that droplets of heavy phase having a controlled size distribution are provided into the contaminated oil via the nozzle. In one embodiment of the invention said heavy phase addition part comprises a pressure measuring device which is configured for measuring a supply pressure to the nozzle and which is provided in communication contact with the control system, wherein said control system further is provided in communication contact with the pump of the heavy phase addition part, whereby the control system is configured to control the pump in dependence of a measured level of the supply pressure measured by the pressure measuring device. Hereby an outlet pressure of the pump can be controlled with precision and hereby the droplet size distribution can be controlled with precision.

In one embodiment of the invention said step of adding droplets of heavy phase into the contaminated oil comprises adding heavy phase to the contaminated oil in the form of steam, whereby droplets of heavy phase will be formed in the contaminated oil when the steam is condensed. In one embodiment of the invention the heavy phase source comprises steam and the heavy phase delivering device is configured for delivering steam into the contaminated oil to be treated in the heavy phase addition part.

In one embodiment of the invention said step of adding droplets of heavy phase into the contaminated oil comprises adding an amount of heavy phase into the contaminated oil and producing droplets of the added heavy phase in a mixing device.

In one embodiment of the invention said method for purification of contaminated oil is performed in an oil purification system and wherein said step of adding droplets is performed in a heavy phase addition part of the oil purification system, whereby the method comprises an initial step of providing contaminated oil into the heavy phase addition part before the step of adding droplets of heavy phase into the contaminated oil is performed in the heavy phase addition part and wherein a further step of forwarding the contaminated oil from the heavy phase addition part to the separation device, possibly via one or more further purification units, is performed before the step of separating the contaminated oil in the separation device.

In one embodiment of the invention the step of adding droplets of heavy phase into the contaminated oil comprises adding heavy phase into the contaminated oil having a temperature between 60-100 degrees Celsius.

### BRIEF DESCRIPTION OF THE DRAWINGS

Figures 1a and 1b show schematically oil purification systems according to the invention.
Figures 1c and 1d show schematically parts of a heavy phase addition part according to some examples of the invention.
Figure 2 is a flow chart of a method according to one embodiment of the invention.
Figures 3a, 3b and 3c show diagrams of a droplet grade efficiency for a centrifugal separator for three different oil viscosities.
Figure 4 is a diagram showing grade efficiency for a centrifugal separator depending on droplet sizes for three different flow rates.

### DETAILED DESCRIPTION OF THE EMBODIMENTS

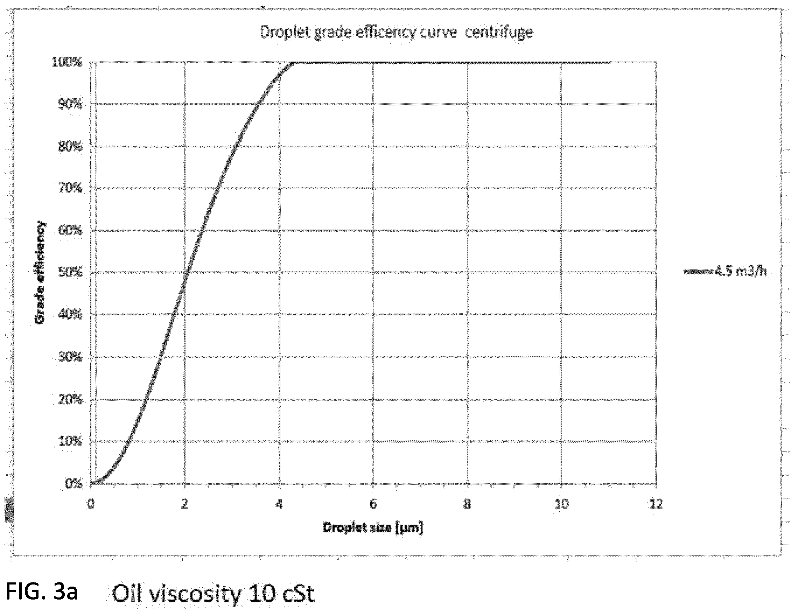

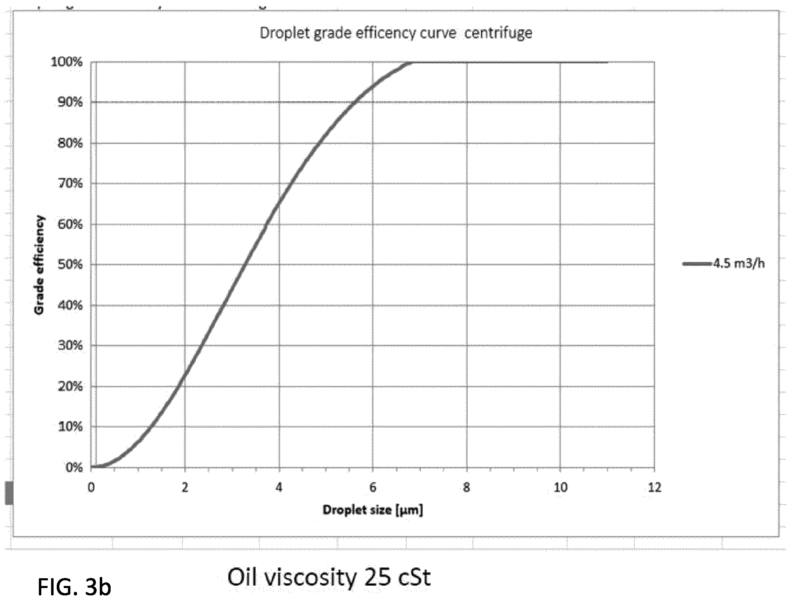

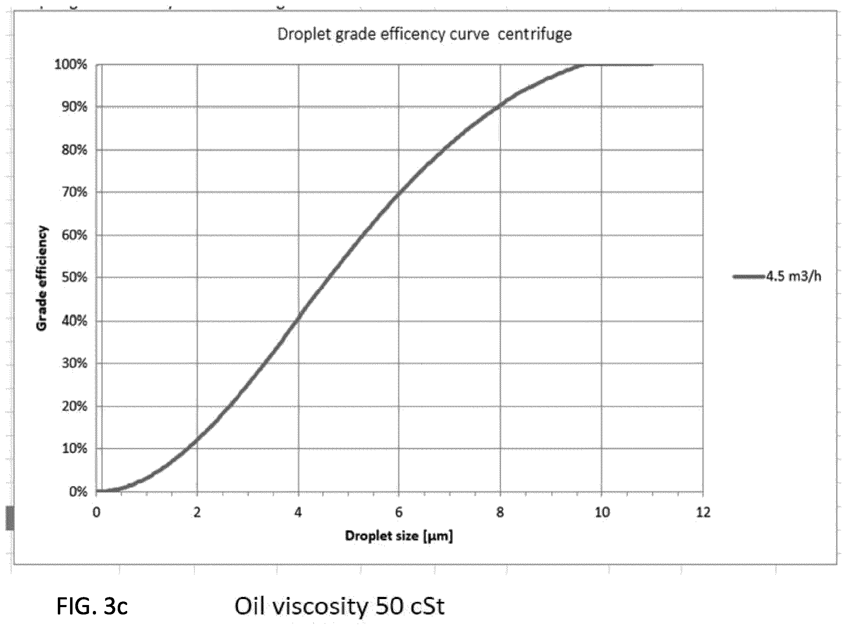

A contaminated oil comprises often a heavy phase (for example water or salty water) and a light phase (different types of oil) as described above. Purification of contaminated oil comprises often a separation of the heavy phase from the light phase. The heavy phase is often, at least to some extent, in the form of small droplets of heavy phase. Droplets can be removed in a separation step but the smaller sizes the droplets have the harder they are to remove. For example, a centrifugal separator will be effective for removing droplets above a certain size to almost 100% but less effective for smaller droplets. The sizes of droplets which can be removed by a centrifugal separator and to what degree they are removed can be illustrated in a grade efficiency curve. Such a curve is dependent on both specific mechanical components and settings in the centrifugal separator but also dependent on for example viscosity and density of the light phase and flow rate. A grade efficiency curve for a centrifugal separator is shown in Figures 3a, 3b and 3c for three different oil viscosities in order to exemplify how the oil viscosity is relevant for which droplet sizes that can be removed by one and the same centrifugal separator. Here it can be seen that in oil with a lower viscosity, smaller sized droplets can be more effectively separated. For example, in this centrifugal separator heavy phase droplets with a size above 4µm are almost separated to 100% in an oil with a viscosity of 10 cSt while only 40% of the heavy phase droplets with a droplet size of 4µm are separated in the same centrifugal separator if the oil has a viscosity of 50 cSt. These three grade efficient curves as shown in Figures 3a, 3b and 3c all use a flow rate of 4,5 m³/h.

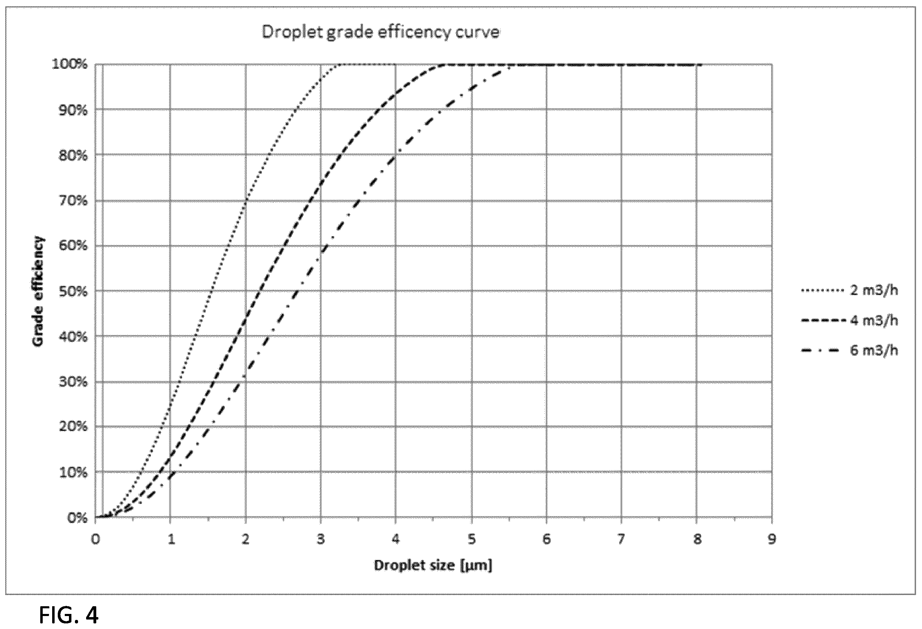

In Figure 4 a grade efficiency curve for a centrifugal separator is shown for three different flow rates. Hereby it is illustrated how a flow rate is relevant for which droplet sizes that efficiently can be removed by one and the same centrifugal separator. For a flow rate of 2 m³/h for example, almost 100% of heavy phase droplets having a size above 3 µm are separated while for a flow rate of 6 m³/h only about 60% of the heavy phase droplets having a size of 3 µm are separated in the same centrifugal separator.

For achieving a better separation of heavy phase and light phase it would be beneficial to avoid small droplets, i.e. droplets being smaller than a certain limit. However, the size limit of the droplets will be different for different parameters in the system, such as oil viscosity, oil density, flow rate and type of separation device and mechanical settings in this separation device. Referring to the diagrams of Figures 3a-3c it would for example, for high oil viscosities be suitable to avoid droplets below 10 µm but for lower oil viscosities droplet sizes as low as 4 µm can be ok. These exact numbers are however only relevant for one specific centrifugal separator and are only given as examples. Furthermore, when purifying slop oil which is comprising different types of oils and emulsions of heavy phase and light phase these parameters will vary for different slop oils to be purified.

By adding droplets of heavy phase to the contaminated oil according to the invention these added droplets will attract (by coalescence) those droplets of heavy phase which are already present in the contaminated oil and the droplets will aggregate and grow in size. Hereby they will be more easily separated in a next separation step, which for the invention is a centrifugal separation step. Other separation methods, not part of the invention, are however also possible such as coalescer filtration or settling. When adding droplets of heavy phase it may be suitable to not add too small droplets which are hard to separate in a next separation step. Hereby, in some embodiments of the invention the added droplets of heavy phase has a size which is larger than a size limit which is set specific for this separation device and which is dependent on for example a light phase viscosity and a flow rate through the system. The size limit is in these embodiments suitably a size of the heavy phase droplets which are separated to 100% or almost 100% in this separation device. Hereby, there is no risk that the added droplets of heavy phase would pass through the oil purification system and not be separated in the separation device. However, if the added small droplets will aggregate to a high degree with other droplets and form larger droplets this may not be a problem. Hereby, in some embodiments of the invention also heavy phase droplets of smaller sizes then such a size limit can be added.

The size distribution of the added droplets of heavy phase is controlled such that they will attract as much as possible of the heavy phase droplets already present in the contaminated oil and such that they can be separated out in a next separation step. This step of controlling a droplet size distribution can be dependent on a number of parameters. In the invention, a light phase sensor is provided in the oil purification system for measuring one or more properties in a light phase retrieved from a light phase outlet from the separation device. The parameters can for example be viscosity, density or flow rate of the light phase or content of heavy phase in the light phase retrieved from the separation device. The controlling of droplet size distribution can hereby be dependent on one or more of these measured parameters whereby the oil purification system can be optimized for efficient oil purification for many different types of contaminated oils and for different conditions. For example, a viscosity and/or a flow rate of the oil can be used as input when a droplet size minimum is set in the system. The system is then optimized for providing heavy phase droplets of a size larger than this droplet size minimum (see Figures 3 and 4).

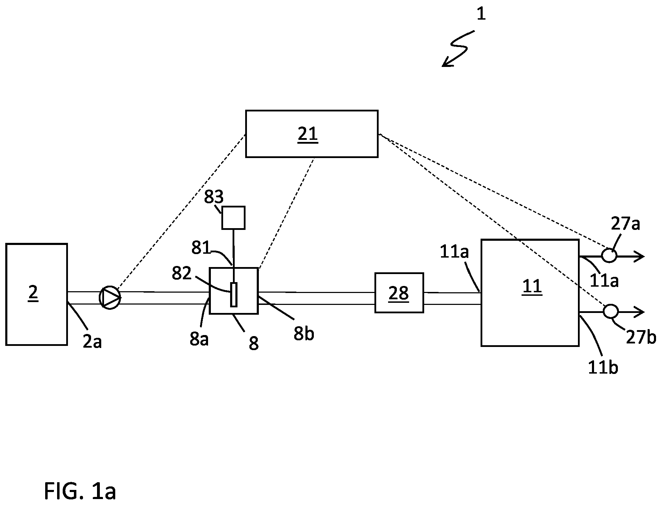

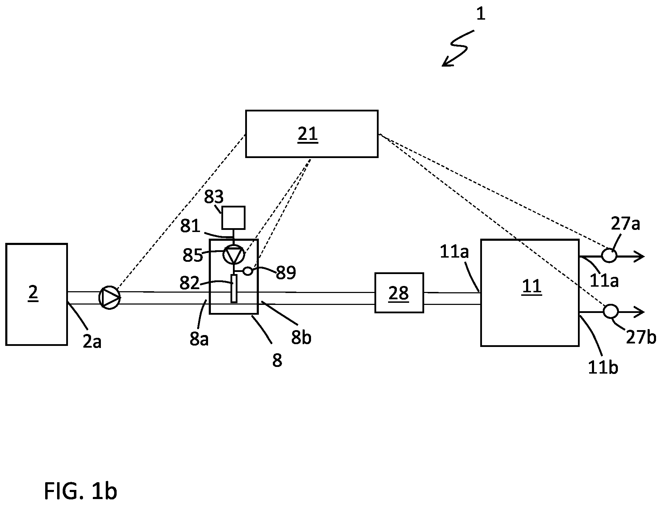

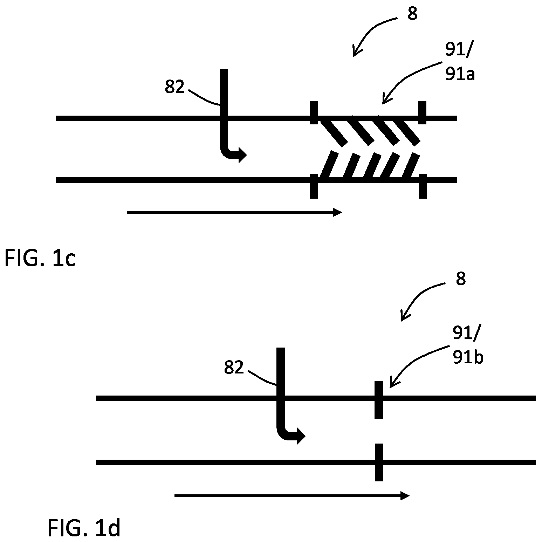

Figures 1a and 1b show schematically oil purification systems 1 according to the invention. In Figure 1a a heavy phase addition part 8 of the oil purification system 1 is illustrated schematically and without specific details, whereby figure 1a can be used for a general description of more than one examples of the invention. In Figure 1b some details of a heavy phase addition part 8 according to one example of the invention is shown and in Figures 1c and 1d parts of a heavy phase addition part 8 according to some examples of the invention are shown schematically. Hereby the different examples of details of the heavy phase addition part 8 as shown in Figures 1b, 1c and 1d can all be used in the heavy phase addition part 8 as shown in Figure 1a. Also other examples are encompassed by the general illustration of Figure 1a as will be discussed below.

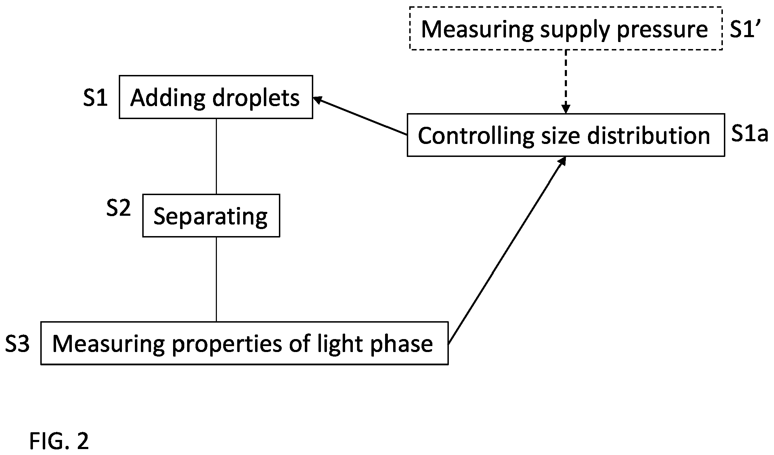

A flow chart of a method for purification of contaminated oil according to some embodiments of the invention is shown in Figure 2. The contaminated oil comprises at least a light phase comprising oil, which can be oils of different types, and a heavy phase comprising water, which can be for example water, water comprising salt, such as brine or water with added mono ethylene glycol (MEG). The method is described by different method steps listed below:
S1: Adding droplets of heavy phase into the contaminated oil. This can be provided in different ways. One example is to spray heavy phase into the contaminated oil from a heavy phase delivering device 82 in the form of a nozzle. Droplets of heavy phase will be formed directly by the nozzle and droplets of heavy phase are hereby added to the contaminated oil. Another example is to add heavy phase in the form of steam into the contaminated oil from a heavy phase delivering device 82. The steam will condense in the contaminated oil and hereby produce droplets of heavy phase. Still a further example is to add heavy phase to the contaminated oil from a heavy phase delivering device 82 whereby the added heavy phase is transferred into a mixing device 91 where it is mixed into droplets. The mixing device 91 can be for example a static mixer, a mixer with moving parts, a mixing pump or one or more restrictions in a pipe transferring the contaminated oil. The heavy phase can suitably be added at a temperature which is at least about the same as the temperature of the contaminated oil. The temperature can be for example 60-100 °C. If the added heavy phase is steam the temperature will be higher.

The step of adding droplets, S1, comprises the step of controlling a size distribution, S1a, of said droplets being added. Hereby droplet sizes of the added droplets of heavy phase are optimized for being effective for improving a separation efficiency of the light phase and the heavy phase of the contaminated oil in a next coming separation step. As discussed above, small droplets may be hard to remove. Suitably a droplet size of heavy phase should be kept above a minimum droplet size limit. See for example the diagrams of Figures 3 and 4 where it is shown that a centrifugal separator is effective to different degree for different droplet sizes and in dependence on different factors such as viscosity and flow rate. The added droplets of heavy phase should have a suitable size distribution which will vary for different conditions in the system and for different conditions of the contaminated oil as discussed above.

S2: Separating the light phase and the heavy phase of the contaminated oil in a separation device 11 of the oil purification system 1.

The method comprises the further step of:
S3: Measuring, by a light phase sensor 27a, one or more properties in a light phase retrieved from a light phase outlet 11a of the separation device 11, wherein said one or more properties comprise one or more of a density, a viscosity, an amount of heavy phase content and a flow rate of the light phase and wherein said step of controlling of a size distribution S1a of the droplets of heavy phase added into the contaminated oil is provided in dependence of at least one value of the measured one or more properties. Hereby one or more of these parameters can be used for setting an appropriate size distribution of droplets for each specific contaminated oil to be purified. This can also be done automatically and continuously during purification or at repeated intervals or between purification of different batches of contaminated oil. The step of controlling a size distribution, S1a, will be performed in dependence of how the heavy phase is added. A few different examples have been described above and they will be further described below in relation to Figures 1a-1d. If for example the heavy phase delivering device 82 is a nozzle which is spraying heavy phase into the contaminated oil, a pump 85 is also provided in the heavy phase addition part 8. This pump 85 can be controlled by a control system 21. The control system 21 will control an outlet pressure from the pump 85 such that a suitable size distribution of the droplets sprayed by the nozzle is achieved. The pump can also be running at a fixed high speed and pressure to the nozzle will be controlled by a regulating valve installed in-between pump and nozzle. Nozzles having different dimensions of the nozzle outlets can also be provided for optimizing a droplet size distribution. In some embodiments of the invention a step of measuring a supply pressure, S1', to the nozzle is also provided by a pressure measuring device 89 provided in the heavy phase addition part 8. The control of the size distribution, S1a, of the droplets can then also be dependent on the measured supply pressure. Hereby a control of the pump can be optimized for achieving optimal size distribution of the droplets. The pressure measuring device 89 is hereby also suitably provided in communication contact with the control system 21.

Other possible methods of adding the heavy phase will be described in more details below but for example steam can be added from a heavy phase delivering device 82. The steam will condense into droplets in the contaminated oil. The size distribution of the droplets may be controlled by controlling the steam pressure for example by controlling the opening of a valve provided to a heavy phase source 83 which in this example comprises steam and which can be connected to the heavy phase addition part 8. If heavy phase in another example, instead is added to the contaminated oil by a heavy phase delivering device 82 and then forwarded to a mixing device 91, a size distribution of the droplets may be controlled by controlling controllable parts of the mixing device, such as for example moving parts.

The control system 21 is provided in communication contact with the light phase sensor 27a. Hereby the control system 21 uses at least one value of the measured at least one parameter as input for controlling a size distribution of added droplets. As discussed above, for example an increased viscosity of the light phase will require the droplets of heavy phase to be larger for being able to be separated efficiently, see the diagrams of Figures 3a, 3b and 3c, and an increased flow rate will also require droplets of larger sizes for being able to be separated efficiently (see diagram of Figure 4). One or more of these parameters may be combined for providing an optimal size distribution of droplets. A measure of the amount of heavy phase in light phase form the light phase outlet 11a may also be a good indication of how to change a size distribution of the added droplets of heavy phase. If there is a too high content of heavy phase in the light phase outlet 11a from the separation device 11 the size distribution may need to changed, for example by controlling the pump 85 to pump at a different pressure for changing droplet sizes sprayed out from the nozzle if the heavy phase addition part 8 comprises a pump and a nozzle.

The addition of droplets of heavy phase according to the invention can in some embodiments of the invention be provided at more than one position in the oil purification system 1. Hereby different size distributions and/or different methods for adding the heavy phase droplets can be used for the different positions and hereby the method can be more efficient.

A more detailed description of the oil purification systems 1 as shown in Figures 1a-1d will now be given. The oil purification system 1 is for purification of contaminated oil comprising at least a light phase comprising oil and a heavy phase comprising water. The oil purification system 1 comprises a separation device 11 configured to separate at least the light phase and the heavy phase of the contaminated oil. The separation device 11 in the invention is a centrifugal separator, however, while not part of the invention, other types of separation device such as a settling tank or different water removal filter designs could be contemplated. The oil purification system comprises furthermore at least one heavy phase addition part 8 which is positioned in the oil purification system 1 such that contaminated oil will be treated in the at least one heavy phase addition part 8 before it is treated in the separation device 11, wherein said heavy phase addition part 8 is configured to add droplets of heavy phase into the contaminated oil.

The oil purification system 1 comprises furthermore a contaminated oil tank 2 in which contaminated oil to be purified can be provided. The heavy phase addition part 8 comprises an inlet 8a which is fluidly connected with an outlet 2a of the contaminated oil tank 2, possibly via one or more other units of the oil purification system 1. The separation device 11 comprises an inlet 11a which is fluidly connected to an outlet 8b of the heavy phase addition part 8, possibly via one or more other units 28 of the oil purification system. Other units of the oil purification system can for example be pumps, valves, filters, tanks, buffer tanks, settling tanks, other separation devices or the like.

In the invention the oil purification system 1 further comprises a control system 21, which is provided in communication contact with the heavy phase addition part 8 and which is configured to control the heavy phase addition part 8 to add droplets of heavy phase with a controlled size distribution. As discussed above this control can be done in different ways depending on the type of heavy phase addition part 8.

In the invention the oil purification system 1 further comprises at least one light phase sensor 27a positioned in the oil purification system 1 for measuring one or more properties in a light phase retrieved from a light phase outlet 11a of the separation device 11. Said one or more properties comprises one or more of a density, a viscosity, an amount of heavy phase content and a flow rate of the light phase. The control system 21 is suitably in communication contact with said at least one light phase sensor 27a and said control system 21 is configured to control said heavy phase addition part 8 to add droplets of heavy phase with a controlled size distribution in dependence of at least one value of said one or more measured properties.

In some embodiments of the invention, but not necessarily, the oil purification system 1 further comprises one or more heavy phase sensors 27b positioned in the oil purification system 1 for measuring one or more properties in a heavy phase retrieved from a heavy phase outlet 11b of the separation device 11. Said one or more properties can comprise for example density and flow rate and also these measurements can be used by the control system for controlling the size distribution of added droplets. Hereby the control system 21 can also be provided in communication contact with the one or more heavy phase sensors 27b.

There are many different alternatives for producing droplets in the heavy phase addition part 8 which are covered by the invention. Some examples are shown in Figures 1b, 1c and 1d. In Figure 1a a general illustration is provided intended to cover all examples and other similar examples.

The heavy phase addition part 8 comprises suitably an inlet 81 which can be connected to a heavy phase source 83. The heavy phase addition part 8 comprises furthermore a heavy phase delivering device 82 which is configured for delivering the heavy phase retrieved from the heavy phase source 83 into the contaminated oil which is treated in the heavy phase addition part 8. This is common details for all the examples shown in Figures 1a-1d even if the heavy phase delivering device 82 may be different in the different examples.

In Figure 1b one example of a heavy phase addition part 8 is shown where the heavy phase addition part 8 comprises a pump 85 for pumping heavy phase from the inlet 81 to the heavy phase delivering device 82. In this example the heavy phase delivering device 82 is a nozzle 82, wherein the nozzle 82 is positioned in the oil purification system 1 such that droplets of heavy phase can be sprayed through the nozzle 82 into the contaminated oil in the oil purification system 1. By spraying the heavy phase through a nozzle 82 droplets of heavy phase will be formed. Outlets of the nozzle can be provided in different dimensions whereby different size distributions of droplets can be provided by choosing a suitable nozzle. In this example the heavy phase addition part 8 further comprises a pressure measuring device 89 which is configured for measuring a supply pressure to the nozzle 82. Both the pump 85 and the pressure measuring device 89 are provided in communication contact with the control system 21, whereby the control system 21 is configured to control the pump 85 in dependence of a measured level of the supply pressure measured by the pressure measuring device 89. Hereby the size distribution of the added droplets of heavy phase can be controlled with precision. The pressure measuring device 89 may comprise at least one pressure sensor 89 which can be positioned in fluid connection with an inlet of the nozzle 82. Hereby a supply pressure to the nozzle 82 can be measured.

In another example the heavy phase addition part 8 is configured for adding steam to the contaminated oil whereby the steam will condense in the oil and produce droplets. In this example the heavy phase source 83 comprises steam and the heavy phase delivering device 82 is configured for delivering steam into the contaminated oil to be treated in the heavy phase addition part 8. A valve provided either in the heavy phase addition part 8 or in the heavy phase source 83 can be controlled from the control system in order to control a supply pressure of the steam and thereby also a size distribution of droplets which are formed.

In another example, as schematically illustrated in Figures 1c and 1d, the heavy phase addition part 8 is configured to add an amount of heavy phase into the contaminated oil and then produce droplets of the added heavy phase in a mixing device 91. Said mixing device 91 can be for example a static mixer 91a, a restriction 91b, a mixing pump or a mixer with a stirring device such as for example an impeller. The mixing device 91 can in some embodiments be controlled to produce droplets with different size distribution. For example, movable parts in the mixing device can be moved, a restriction can be controlled to provide different amounts of restriction and an impeller can be controlled to rotate at different speeds. This may be controlled from the control system 21 and possibly in dependence of at least one value of one or more measured parameters of the light phase as described above.

## Claims

1. A method for purification of contaminated oil, wherein said contaminated oil comprises at least a light phase comprising oil and a heavy phase comprising water, said method comprising the steps of:
- adding droplets of heavy phase into the contaminated oil; and
- separating the light phase and the heavy phase of the contaminated oil in a separation device (11) being a centrifugal separator,
wherein said method further comprises a step of measuring one or more properties in a light phase retrieved from a light phase outlet (11a) of the separation device (11), wherein said one or more properties comprise one or more of a density, a viscosity, an amount of heavy phase content and a flow rate of the light phase and wherein said step of adding droplets comprises controlling a size distribution of said droplets being added and wherein said controlling of a size distribution of the droplets of heavy phase added into the contaminated oil is provided in dependence of at least one value of the measured one or more properties.

2. Method according to claim 1, wherein said step of adding droplets of heavy phase into the contaminated oil comprises adding the droplets via a nozzle (82) into the contaminated oil and wherein a size distribution of said droplets is controlled by controlling a supply pressure to the nozzle (82).

3. Method according to claim 2, further comprising a step of measuring a supply pressure to the nozzle (82) and wherein the step of adding droplets comprises controlling a pump (85) in dependence of said measured supply pressure to pump heavy phase from a heavy phase source (83) and through the nozzle (82) such that droplets of heavy phase having a controlled size distribution are provided into the contaminated oil via the nozzle.

4. Method according to claim 1, wherein said step of adding droplets of heavy phase into the contaminated oil comprises adding heavy phase to the contaminated oil in the form of steam, whereby droplets of heavy phase will be formed in the contaminated oil when the steam is condensed.

5. Method according to claim 1, wherein said step of adding droplets of heavy phase into the contaminated oil comprises adding an amount of heavy phase into the contaminated oil and producing droplets of the added heavy phase in a mixing device in which the heavy phase is mixed into droplets.

6. Method according to any one of the preceding claims, wherein said method for purification of contaminated oil is performed in an oil purification system (1) and wherein said step of adding droplets is performed in a heavy phase addition part (8) of the oil purification system (1), whereby the method comprises an initial step of providing contaminated oil into the heavy phase addition part (8) before the step of adding droplets of heavy phase into the contaminated oil is performed in the heavy phase addition part (8) and wherein a further step of forwarding the contaminated oil from the heavy phase addition part (8) to the separation device (11), possibly via one or more further purification units (28), is performed before the step of separating the contaminated oil in the separation device (11).

7. Method according to any one of the preceding claims, wherein the step of adding droplets of heavy phase into the contaminated oil comprises adding heavy phase into the contaminated oil having a temperature between 60-100 degrees Celsius.

8. An oil purification system for purification of contaminated oil comprising at least a light phase comprising oil and a heavy phase comprising water, said oil purification system (1) comprising:
- a separation device (11) which is a centrifugal separator configured to separate at least the light phase and the heavy phase of the contaminated oil;
- at least one heavy phase addition part (8) which is positioned in the oil purification system (1) such that contaminated oil will be treated in the at least one heavy phase addition part (8) before it is treated in the separation device (11), wherein said heavy phase addition part (8) is configured to add droplets of heavy phase into the contaminated oil;
- at least one light phase sensor (27a) positioned in the oil purification system (1) for measuring one or more properties in a light phase retrieved from a light phase outlet (11a) of the separation device (11), wherein said one or more properties comprises one or more of a density, a viscosity, an amount of heavy phase content and a flow rate of the light phase; and
- a control system (21), which is provided in communication contact with the heavy phase addition part (8) and configured to control the heavy phase addition part (8) to add droplets of heavy phase with a controlled size distribution and wherein said control system (21) is in communication contact with said at least one light phase sensor (27a) and wherein said control system (21) is configured to control said heavy phase addition part (8) to add droplets of heavy phase with a controlled size distribution in dependence of at least one value of said one or more measured properties.

9. Oil purification system according to claim 8, further comprising a contaminated oil tank (2) in which contaminated oil to be purified can be provided, and wherein said heavy phase addition part (8) comprises an inlet (8a) which is fluidly connected with an outlet (2a) of the contaminated oil tank (2), possibly via one or more other units of the oil purification system (1) and wherein the separation device (11) comprises an inlet (11a) which is fluidly connected to an outlet (8b) of the heavy phase addition part (8), possibly via one or more other units (28) of the oil purification system.

10. Oil purification system according to any one of the claims 8-9, wherein the heavy phase addition part (8) comprises an inlet (81) which can be connected to a heavy phase source (83) and wherein the heavy phase addition part (8) further comprises a heavy phase delivering device (82) which is configured for delivering heavy phase into the contaminated oil which is treated in the heavy phase addition part (8), preferably the heavy phase source (83) comprises steam and wherein the heavy phase delivering device (82) is configured for delivering steam into the contaminated oil to be treated in the heavy phase addition part (8).

11. Oil purification system according to claim 10, wherein the heavy phase addition part (8) comprises a pump (85) for pumping heavy phase from the inlet (81) to the heavy phase delivering device (82), wherein said heavy phase delivering device (82) is a nozzle (82), wherein the nozzle (82) is positioned in the oil purification system (1) such that droplets of heavy phase can be sprayed through the nozzle (82) into the contaminated oil in the oil purification system (1).

12. Oil purification system according to claim 11, wherein said heavy phase addition part (8) comprises a pressure measuring device (89) which is configured for measuring a supply pressure to the nozzle (82) and which is provided in communication contact with the control system (21), wherein said control system further is provided in communication contact with the pump (85) of the heavy phase addition part (8), whereby the control system (21) is configured to control the pump (85) in dependence of a measured level of the supply pressure measured by the pressure measuring device (89).

## Patentansprüche

1. Verfahren zur Reinigung von kontaminiertem Öl, wobei das kontaminierte Öl mindestens eine Leichtphase, die Öl umfasst, und eine Schwerphase umfasst, die Wasser umfasst, wobei das Verfahren die folgenden Schritte umfasst:
- Zugeben von Tröpfchen von Schwerphase in das kontaminierte Öl; und
- Trennen der Leichtphase und der Schwerphase des kontaminierten Öls in einer Trennvorrichtung (11), bei der es sich um einen Zentrifugalabscheider handelt,
wobei das Verfahren ferner einen Schritt des Messens von einer oder mehreren Eigenschaften in einer Leichtphase umfasst, die aus einem Leichtphasenauslass (11a) der Trennvorrichtung (11) entnommen wurde, wobei die eine oder mehreren Eigenschaften eine oder mehrere von einer Dichte, einer Viskosität, einer Menge an Schwerphasengehalt und einer Flussrate der Leichtphase umfasst, und wobei der Schritt des Zugebens von Tröpfchen Steuern einer Größenverteilung der zugegebenen Tröpfchen umfasst, und wobei Steuern einer Größenverteilung der Tröpfchen der Schwerphase, die dem kontaminierten Öl zugegeben werden, in Abhängigkeit von mindestens einem Wert der gemessenen einen oder mehreren Eigenschaften bereitgestellt wird.

2. Verfahren nach Anspruch 1, wobei der Schritt des Zugebens von Tröpfchen von Schwerphase in das kontaminierte Öl Zugeben der Tröpfchen über eine Düse (82) in das kontaminierte Öl umfasst, und wobei eine Größenverteilung der Tröpfchen durch Steuern eines Zufuhrdrucks zu der Düse (82) gesteuert wird.

3. Verfahren nach Anspruch 2, ferner umfassend einen Schritt des Messens eines Zufuhrdrucks zu der Düse (82), und wobei der Schritt des Zugebens von Tröpfchen Steuern einer Pumpe (85) in Abhängigkeit von dem gemessenen Zufuhrdruck umfasst, um Schwerphase von einer Schwerphasenquelle (83) und durch die Düse (82) zu pumpen, so dass Tröpfchen von Schwerphase mit einer gesteuerten Größenverteilung über die Düse in das kontaminierte Öl hinein bereitgestellt werden.

4. Verfahren nach Anspruch 1, wobei der Schritt des Zugebens von Tröpfchen von Schwerphase in das kontaminierte Öl Zugeben von Schwerphase zu dem kontaminierten Öl in Form von Dampf umfasst, wodurch Tröpfchen von Schwerphase in dem kontaminierten Öl gebildet werden, wenn der Dampf kondensiert.

5. Verfahren nach Anspruch 1, wobei der Schritt des Zugebens von Tröpfchen von Schwerphase in das kontaminierte Öl Zugeben einer Menge von Schwerphase in das kontaminierte Öl und Produzieren von Tröpfchen der zugegebenen Schwerphase in einer Mischvorrichtung umfasst, in der die Schwerphase in Tröpfchen gemischt wird.

6. Verfahren nach einem der vorhergehenden Ansprüche, wobei das Verfahren zur Reinigung von kontaminiertem Öl in einem Ölreinigungssystem (1) durchgeführt wird, und wobei der Schritt des Zugebens von Tröpfchen in einem Schwerphasenzugabeteil (8) des Ölreinigungssystems (1) durchgeführt wird, wobei das Verfahren einen Anfangsschritt des Bereitstellens von kontaminiertem Öl in den Schwerphasenzugabeteil (8) umfasst, bevor der Schritt des Zugebens von Tröpfchen der Schwerphase in das kontaminierte Öl in dem Schwerphasenzugabeteil (8) durchgeführt wird, und wobei ein weiterer Schritt des Weiterleitens des kontaminierten Öls von dem Schwerphasenzugabeteil (8) zu der Trennvorrichtung (11), möglicherweise über eine oder mehrere weitere Reinigungseinheiten (28), vor dem Schritt des Trennens des kontaminierten Öls in der Trennvorrichtung (11) durchgeführt wird.

7. Verfahren nach einem der vorhergehenden Ansprüche, wobei der Schritt des Zugebens von Tröpfchen von Schwerphase in das kontaminierte Öl Zugeben von Schwerphase in das kontaminierte Öl mit einer Temperatur zwischen 60 und 100 Grad Celsius umfasst.

8. Ölreinigungssystem zur Reinigung von kontaminiertem Öl, das mindestens eine Leichtphase, die Öl umfasst, und eine Schwerphase umfasst, die Wasser umfasst, wobei das Ölreinigungssystem (1) Folgendes umfasst:
- eine Trennvorrichtung (11), bei der es sich um einen Zentrifugalabscheider handelt, der dazu ausgelegt ist, mindestens die Leichtphase und die Schwerphase des kontaminierten Öls zu trennen;
- mindestens einen Schwerphasenzugabeteil (8), der in dem Ölreinigungssystem (1) so positioniert ist, dass kontaminiertes Öl in dem mindestens einen Schwerphasenzugabeteil (8) behandelt wird, bevor es in der Trennvorrichtung (11) behandelt wird, wobei der Schwerphasenzugabeteil (8) dazu ausgelegt ist, um Tröpfchen von Schwerphase in das kontaminierte Öl zuzugeben;
- mindestens einen Leichtphasensensor (27a), der in dem Ölreinigungssystem (1) positioniert ist, um eine oder mehrere Eigenschaften in einer Leichtphase zu messen, die aus einem Leichtphasenauslass (11a) der Trennvorrichtung (11) entnommen wurde, wobei die eine oder mehreren Eigenschaften eine oder mehrere von einer Dichte, einer Viskosität, einer Menge an Schwerphasengehalt und einer Flussrate der Leichtphase umfasst/umfassen; und
- ein Steuersystem (21), das in Kommunikationskontakt mit dem Schwerphasenzugabeteil (8) bereitgestellt ist und dazu ausgelegt ist, den Schwerphasenzugabeteil (8) zu steuern, um Tröpfchen von Schwerphase mit einer gesteuerten Größenverteilung zuzugeben, und wobei das Steuersystem (21) in Kommunikationskontakt mit dem mindestens einen Leichtphasensensor (27a) steht, und wobei das Steuersystem (21) dazu ausgelegt ist, den Schwerphasenzugabeteil (8) so zu steuern, dass in Abhängigkeit von mindestens einem Wert der einen oder mehreren gemessenen Eigenschaften Tröpfchen von Schwerphase mit einer gesteuerten Größenverteilung zugegeben werden.

9. Ölreinigungssystem nach Anspruch 8, ferner umfassend einen kontaminierten Öltank (2), in dem zu reinigendes kontaminiertes Öl bereitgestellt werden kann, und wobei der Schwerphasenzugabeteil (8) einen Einlass (8a) umfasst, der mit einem Auslass (2a) des kontaminierten Öltanks (2) fließtechnisch verbunden ist, gegebenenfalls über eine oder mehrere andere Einheiten des Ölreinigungssystems (1), und wobei die Trennvorrichtung (11) einen Einlass (11a) umfasst, der fließtechnisch mit einem Auslass (8b) des Schwerphasenzugabeteils (8) verbunden ist, gegebenenfalls über eine oder mehrere andere Einheiten (28) des Ölreinigungssystems.

10. Ölreinigungssystem nach einem der Ansprüche 8-9, wobei der Schwerphasenzugabeteil (8) einen Einlass (81) umfasst, der mit einer Schwerphasenquelle (83) verbunden werden kann, und wobei der Schwerphasenzugabeteil (8) ferner eine Schwerphasenabgabevorrichtung (82) umfasst, die ausgelegt ist, um Schwerphase in das kontaminierte Öl abzugeben, das in dem Schwerphasenzugabeteil (8) behandelt wird, wobei die Schwerphasenquelle (83) vorzugsweise Dampf umfasst, und wobei die Schwerphasenabgabevorrichtung (82) dazu ausgelegt ist, Dampf in das zu behandelnde kontaminierte Öl im Schwerphasenzugabeteil (8) abzugeben.

11. Ölreinigungssystem nach Anspruch 10, wobei der Schwerphasenzugabeteil (8) eine Pumpe (85) zum Pumpen von Schwerphase von dem Einlass (81) zu der Schwerphasenabgabevorrichtung (82) umfasst, wobei die Schwerphasenabgabevorrichtung (82) eine Düse (82) ist, wobei die Düse (82) in dem Ölreinigungssystem (1) so positioniert ist, dass Tröpfchen von Schwerphase durch die Düse (82) in das kontaminierte Öl in dem Ölreinigungssystem (1) gesprüht werden können.

12. Ölreinigungssystem nach Anspruch 11, wobei das Schwerphasenzugabeteil (8) eine Druckmessvorrichtung (89) umfasst, die ausgelegt ist, um einen Zufuhrdruck zu der Düse (82) zu messen, und die in Kommunikationskontakt mit dem Steuersystem (21) bereitgestellt ist, wobei das Steuersystem ferner in Kommunikationskontakt mit der Pumpe (85) des Schwerphasenzugabeteils (8) bereitgestellt ist, wobei das Steuersystem (21) dazu ausgelegt ist, die Pumpe (85) in Abhängigkeit von einem gemessenen Niveau des von der Druckmessvorrichtung (89) gemessenen Zufuhrdrucks zu steuern.

## Revendications

1. Procédé de purification d'huile contaminée, dans lequel ladite huile contaminée comprend au moins une phase légère comprenant de l'huile et une phase lourde comprenant de l'eau, ledit procédé comprenant les étapes suivantes :
- l'ajout de gouttelettes de phase lourde dans l'huile contaminée ; et
- la séparation de la phase légère et la phase lourde de l'huile contaminée dans un dispositif de séparation (11) qui est un séparateur centrifuge,
dans lequel ledit procédé comprend en outre une étape de mesure d'une ou de plusieurs propriétés dans une phase légère récupérée à partir d'une sortie de phase légère (11a) du dispositif de séparation (11), dans lequel lesdites une ou plusieurs propriétés comprennent une densité et/ou une viscosité et/ou une quantité de contenu de phase lourde et/ou un débit de la phase légère et dans lequel ladite étape d'ajout de gouttelettes comprend la commande d'une distribution granulométrique desdites gouttelettes ajoutées et dans lequel ladite commande d'une distribution granulométrique des gouttelettes de phase lourde ajoutées dans l'huile contaminée est fournie en fonction d'au moins une valeur desdites une ou plusieurs propriétés mesurées.

2. Procédé selon la revendication 1, dans lequel ladite étape d'ajout de gouttelettes de phase lourde dans l'huile contaminée comprend l'ajout des gouttelettes par l'intermédiaire d'une buse (82) dans l'huile contaminée et dans lequel une distribution granulométrique desdites gouttelettes est commandée en commandant une pression d'alimentation vers la buse (82).

3. Procédé selon la revendication 2, comprenant en outre une étape de mesure d'une pression d'alimentation vers la buse (82) et dans lequel l'étape d'ajout de gouttelettes comprend la commande d'une pompe (85) en fonction de ladite pression d'alimentation mesurée afin de pomper une phase lourde à partir d'une source de phase lourde (83) et à travers la buse (82) de telle sorte que des gouttelettes de phase lourde ayant une distribution granulométrique commandée soient fournies dans l'huile contaminée par l'intermédiaire de la buse.

4. Procédé selon la revendication 1, dans lequel ladite étape d'ajout de gouttelettes de phase lourde dans l'huile contaminée comprend l'ajout de phase lourde à l'huile contaminée sous forme de vapeur, moyennant quoi des gouttelettes de phase lourde vont se former dans l'huile contaminée lorsque la vapeur se condense.

5. Procédé selon la revendication 1, dans lequel ladite étape d'ajout de gouttelettes de phase lourde dans l'huile contaminée comprend l'ajout d'une quantité de phase lourde dans l'huile contaminée et la production de gouttelettes de la phase lourde ajoutée dans un dispositif de mélange dans lequel la phase lourde est mélangée en gouttelettes.

6. Procédé selon l'une quelconque des revendications précédentes, dans lequel ledit procédé de purification d'huile contaminée est mis en œuvre dans un système de purification d'huile (1) et dans lequel ladite étape d'ajout de gouttelettes est mise en œuvre dans une partie d'ajout de phase lourde (8) du système de purification d'huile (1), moyennant quoi le procédé comprend une étape initiale de fourniture d'huile contaminée dans la partie d'ajout de phase lourde (8) avant la réalisation de l'étape d'ajout de gouttelettes de phase lourde dans l'huile contaminée dans la partie d'ajout de phase lourde (8) et dans lequel une étape supplémentaire d'acheminement de l'huile contaminée de la partie d'ajout de phase lourde (8) vers le dispositif de séparation (11), éventuellement par l'intermédiaire d'une ou de plusieurs unités de purification (28) supplémentaires, est effectuée avant l'étape de séparation de l'huile contaminée dans le dispositif de séparation (11).

7. Procédé selon l'une quelconque des revendications précédentes, dans lequel l'étape d'ajout de gouttelettes de phase lourde dans l'huile contaminée comprend l'ajout d'une phase lourde dans l'huile contaminée ayant une température entre 60 et 100 degrés Celsius.

8. Système de purification d'huile pour la purification d'une huile contaminée comprenant au moins une phase légère comprenant de l'huile et une phase lourde comprenant de l'eau, ledit système de purification d'huile (1) comprenant :
- un dispositif de séparation (11) qui est un séparateur centrifuge configuré pour séparer au moins la phase légère et la phase lourde de l'huile contaminée ;
- au moins une partie d'ajout de phase lourde (8) qui est positionnée dans le système de purification d'huile (1) de telle sorte que l'huile contaminée va être traitée dans l'au moins une partie d'ajout de phase lourde (8) avant d'être traitée dans le dispositif de séparation (11), dans lequel ladite partie d'ajout de phase lourde (8) est configurée pour ajouter des gouttelettes de phase lourde dans l'huile contaminée ;
- au moins un capteur de phase légère (27a) positionné dans le système de purification d'huile (1) pour mesurer une ou plusieurs propriétés dans une phase légère récupérée à partir d'une sortie de phase légère (11a) du dispositif de séparation (11), dans lequel ladite ou lesdites propriétés comprennent une densité et/ou une viscosité et/ou une quantité de contenu de phase lourde et/ou un débit de la phase légère ; et
- un système de commande (21), qui est fourni en contact de communication avec la partie d'ajout de phase lourde (8) et configuré pour commander la partie d'ajout de phase lourde (8) afin d'ajouter des gouttelettes de phase lourde avec une distribution granulométrique commandée et dans lequel ledit système de commande (21) est en contact de communication avec ledit au moins un capteur de phase légère (27a) et dans lequel ledit système de commande (21) est configuré pour commander ladite partie d'ajout de phase lourde (8) afin d'ajouter des gouttelettes de phase lourde avec une distribution granulométrique commandée en fonction d'au moins une valeur desdites une ou plusieurs propriétés mesurées.

9. Système de purification d'huile selon la revendication 8, comprenant en outre un réservoir d'huile contaminée (2) dans lequel l'huile contaminée à purifier peut être fournie, et dans lequel ladite partie d'ajout de phase lourde (8) comprend une entrée (8a) qui est reliée de manière fluidique à une sortie (2a) du réservoir d'huile contaminée (2), éventuellement par le biais d'une ou de plusieurs autres unités du système de purification d'huile (1) et dans lequel le dispositif de séparation (11) comprend une entrée (11a) qui est reliée de manière fluidique à une sortie (8b) de la partie d'ajout de phase lourde (8), éventuellement par le biais d'une ou de plusieurs autres unités (28) du système de purification d'huile.

10. Système de purification d'huile selon l'une quelconque des revendications 8 à 9, dans lequel la partie d'ajout de phase lourde (8) comprend une entrée (81) qui peut être reliée à une source de phase lourde (83) et dans lequel la partie d'ajout de phase lourde (8) comprend en outre un dispositif d'administration de phase lourde (82) qui est configuré pour administrer la phase lourde dans l'huile contaminée qui est traitée dans la partie d'ajout de phase lourde (8), de préférence la source de phase lourde (83) comprend de la vapeur et dans lequel le dispositif d'administration de phase lourde (82) est configuré pour administrer de la vapeur dans l'huile contaminée à traiter dans la partie d'ajout de phase lourde (8).

11. Système de purification d'huile selon la revendication 10, dans lequel la partie d'ajout de phase lourde (8) comprend une pompe (85) pour pomper la phase lourde de l'entrée (81) vers le dispositif d'administration de phase lourde (82), dans lequel ledit dispositif d'administration de phase lourde (82) est une buse (82), dans lequel la buse (82) est positionnée dans le système de purification d'huile (1) de telle sorte que des gouttelettes de phase lourde puissent être pulvérisées à travers la buse (82) dans l'huile contaminée dans le système de purification d'huile (1).

12. Système de purification d'huile selon la revendication 11, dans lequel ladite partie d'ajout de phase lourde (8) comprend un dispositif de mesure de pression (89) qui est configuré pour mesurer une pression d'alimentation vers la buse (82) et qui est fourni en contact de communication avec le système de commande (21), dans lequel ledit système de commande est en outre fourni en contact de communication avec la pompe (85) de la partie d'ajout de phase lourde (8), moyennant quoi le système de commande (21) est configuré pour commander la pompe (85) en fonction d'un niveau mesuré de la pression d'alimentation mesurée par le dispositif de mesure de pression (89).
